# FASCICULE DE BREVET EUROPEEN

(11) **EP 4 396 601 B1**
(45) Date de publication et mention de la délivrance du brevet: **04.11.2026**
(21) Numéro de dépôt: 22772948.0
(22) Date de dépôt: 02.09.2022
(51) Int. Cl.: G01S 7/02, G01S 7/03, G01S 13/931

(54) **SYSTÈME RADAR, PIÈCE DE CARROSSERIE ET VÉHICULE ASSOCIÉS**
RADARSYSTEM UND ZUGEHÖRIGES KAROSSERIETEIL UND FAHRZEUG
RADAR SYSTEM, AND ASSOCIATED BODYWORK PART AND VEHICLE

(30) Priorité: 03.09.2021 FR 2109245
(43) Date de publication de la demande: 10.07.2024
(73) Titulaire: OPmobility SE, 69007 Lyon (FR)
(72) Inventeur: BANCELIN, Mathieu, 01150 SAINTE-JULIE (FR); GILOTTE, Philippe, 01150 SAINTE-JULIE (FR); ROCHEBLAVE, Laurent, 01150 SAINTE-JULIE (FR); STABLO, Frédéric, 01150 SAINTE-JULIE (FR)
(74) Mandataire: LLR
(86) Numéro de dépôt international: PCT/EP2022/074503
(87) Numéro de publication internationale: WO 2023/031422

(56) Documents cités:
- EP-A1- 3 734 749
- WO-A1-2020/043633
- US-A1- 2016 240 907
- US-A1- 2018 210 079

## Description

La présente invention concerne le domaine des véhicules à moteur, par exemple des véhicules automobiles, équipés d'un système radar pour émettre et/ou recevoir une onde électromagnétique dans une direction souhaitée, notamment pour détecter un obstacle.

On connaît des véhicules automobiles équipés de dispositifs de type radar, généralement positionnés sur les pare-chocs avant et arrière du véhicule. Ces dispositifs radars sont utilisés pour l'assistance au stationnement mais également pour l'assistance à la conduite, par exemple pour les applications de régulation de la vitesse des véhicules en fonction du trafic mieux connues sous le sigle anglo-saxon ACC (« Adaptative Cruise Control ») dans lesquelles le dispositif radar détecte la vitesse et la distance d'un véhicule précédant le véhicule porteur du dispositif radar. Un tel radar sert en particulier à réguler la vitesse des véhicules en fonction du trafic et/ou d'obstacles sur la route. Le radar détecte la vitesse et la distance de l'objet précédant le véhicule porteur, de façon à maintenir notamment une distance de sécurité entre les véhicules.

De façon générale, un domaine important des applications de radars de l'industrie automobile est celui de la carrosserie des véhicules dans laquelle on intègre de plus en plus de modules radars pour permettre la détection périphérique totale autour du véhicule, par exemple pour des équipements tels que des systèmes d'assistance aux manœuvres de parking, des systèmes d'assistance de recul ou des installations de protection des piétons ou autres systèmes de ce type. Cependant ces différents radars sont de types différents suivant leur champ de détection (longue ou courte distance, détection frontale ou latérale, ...) et leur fonction (parking, conduite autonome ...) mais aussi suivant leur fabricant, ce qui ne leur permet pas de pouvoir consolider de façon optimale les données fournies par chacun indépendamment aux divers équipements du véhicule qui peuvent les exploiter (freinage, direction, phares, alarmes sonores ou visuelles ...).

Ainsi, afin de mieux caractériser l'environnement périphérique du véhicule, les constructeurs automobiles ont besoin de dispositifs permettant d'améliorer, d'une part, la taille du volume à surveiller autour du véhicule, et d'autre part, la résolution du traitement des informations issues de ces dispositifs. Ceci, afin que le véhicule interagisse au mieux, c'est-à-dire avec plus de précision et plus rapidement, avec son environnement, pour notamment, éviter des accidents, faciliter les manœuvres et rouler de façon autonome.

Afin d'augmenter la détection périphérique en volume (3D) autour du véhicule, les constructeurs automobiles sont amenés à multiplier le nombre de radars distribués sur une surface donnée.

Cependant, l'augmentation du nombre de radars utilisés, engendre une augmentation du coût.

De plus, l'augmentation du nombre de radars nécessite d'alimenter en continu de nombreuses pistes radiofréquences, ce qui consomme beaucoup d'énergie, ce qui est très préjudiciable notamment pour des véhicules autonomes et/ou électriques.

Par ailleurs, même si les radars peuvent être un peu miniaturisés, l'augmentation du nombre de radars distribués sur une surface donnée peut être difficile à réaliser du fait de la surface disponible limitée (la taille des pièces de carrosserie ne peut être augmentée) ainsi que la présence d'autres équipements, d'autant plus qu'il peut être nécessaire de conserver une distance minimale entre chaque radar pour éviter qu'ils n'interfèrent entre eux. Le document WO2020/043633A1, du demandeur divulgue un radar utilisant une ou plusieurs antennes à cavités réfléchissantes et comportant des métasurfaces et des guides d'onde.

Pour obtenir des informations supplémentaires relatives à la position et à la vitesse d'un obstacle données par les radars, on recherche des dispositifs ayant notamment une résolution spatiale accrue permettant par exemple de reconnaître les objets (environnement ou obstacles) entourant le véhicule, de suivre leur trajectoire, d'en constituer une imagerie la plus complète possible.

Ainsi, les véhicules s'équipent de plus en plus de dispositifs complémentaires aux radars, tels que des LIDAR et des caméras.

La résolution spatiale exprime la capacité d'un dispositif d'observation à distinguer les détails. Elle peut être caractérisée notamment par la distance minimale qui doit séparer deux points contigus pour qu'ils soient correctement discernés.

Dans le cas d'un radar, cette distance de résolution est fonction du rapport entre la longueur d'onde de l'onde utilisée pour l'observation, et la taille de l'ouverture du dispositif d'observation. Ainsi, pour améliorer la résolution spatiale, c'est-à-dire diminuer la distance de résolution, il est nécessaire de diminuer la longueur d'onde (augmenter la fréquence de l'onde) et/ou nécessaire d'augmenter l'ouverture du dispositif d'observation. En effet, la résolution spatiale R est caractérisée par l'équation suivante : $R = \frac{c ∗ L}{f ∗ O}$ avec *c* la vitesse de la lumière, *L* la distance entre le dispositif d'observation et la cible, *f* la fréquence du radar et *O* l'ouverture du dispositif d'observation.

C'est la raison pour laquelle on cherche aujourd'hui à utiliser des radars fonctionnant à plus haute fréquence, par exemple à 77GhZ au lieu de 24GHz.

Et au contraire, la miniaturisation des radars actuels conduit à réduire leur ouverture donc leur résolution.

Par ailleurs, un problème rencontré pour un radar porté par une pièce de carrosserie concerne le positionnement du radar. En effet, il est important de pouvoir assurer l'intégrité d'un radar, afin qu'il remplisse sa fonction correctement, même en cas de déformation de la pièce de carrosserie le portant (choc, dilatation thermique, ...). Il est donc nécessaire d'assurer un bon positionnement du radar (direction d'émission/réception maintenue) pendant toute la durée d'utilisation de la fonction radar.

Il convient donc de fournir une solution permettant de fournir la position et la vitesse des objets situés autour du véhicule et d'obtenir une portée et une résolution spatiale plus adaptées, tout en limitant le coût et la consommation énergétique du dispositif de détection. Cela permet d'améliorer la détection d'objets ou de personnes autour du véhicule et de faciliter l'implantation de tels systèmes dans des véhicules autonomes, notamment des véhicules électriques dont la consommation doit être limitée au maximum.

À cet effet, l'invention a pour objet un système radar pour véhicule à moteur comprenant :
- une unité électronique configurée pour émettre et recevoir une onde électromagnétique dans une plage de fréquence prédéterminée,
- une première antenne directive comprenant une première cavité réfléchissante aux ondes électromagnétiques dans laquelle est positionnée une première métasurface, ladite première antenne étant configurée pour être reliée à l'unité électronique via un premier guide d'onde et pour transmettre une onde électromagnétique, émise par l'unité électronique et propagée via le premier guide d'onde, dans une première direction prédéterminée et/ou pour propager une onde électromagnétique reçue depuis la première direction prédéterminée vers l'unité électronique via le premier guide d'onde,
- une deuxième antenne directive comprenant une deuxième cavité réfléchissante aux ondes électromagnétiques dans laquelle est positionnée une deuxième métasurface, ladite deuxième antenne étant configurée pour être reliée à l'unité électronique via un deuxième guide d'onde et pour transmettre une onde électromagnétique, émise par l'émetteur/récepteur et propagée via le deuxième guide d'onde, dans une deuxième direction prédéterminée et/ou pour propager une onde électromagnétique reçue depuis la deuxième direction prédéterminée vers l'unité électronique via le deuxième guide d'onde, dans lequel la première antenne dite antenne émettrice est configurée pour émettre une onde électromagnétique issue de l'unité électronique et propagée via le premier guide d'onde dans la première direction prédéterminée et la deuxième antenne dite antenne réceptrice est configurée pour recevoir l'onde électromagnétique émise par l'antenne émettrice et réfléchie par un obstacle dans la deuxième direction prédéterminée et pour propager l'onde électromagnétique reçue vers l'unité électronique via le deuxième guide d'onde.

Selon un autre aspect de la présente invention, la première direction prédéterminée correspond à un cône d'émission autour d'un axe central d'émission et la deuxième direction prédéterminée correspond à un cône de réception autour d'un axe central de réception.

Selon un aspect supplémentaire de la présente invention, l'écart en azimut entre l'axe central d'émission et l'axe central de réception est inférieure à 30°.

Selon un aspect additionnel de la présente invention, l'écart en élévation entre l'axe central d'émission et une direction horizontale d'une part et entre l'axe central de réception et une direction horizontale d'autre part est inférieur à 5°, notamment égal à 0°.

Selon un autre aspect de la présente invention, les sections du cône d'émission et du cône de réception ont une forme allongée, notamment oblongue, et les antennes sont disposées de sorte que, d'une part, l'angle d'assiette de l'antenne formé par l'écart angulaire entre le grand axe de la forme allongée et une direction horizontale est inférieur à 30°, notamment inférieur à 5° et d'autre part l'écart angulaire entre l'angle d'assiette de la première antenne et de la deuxième antenne est inférieur à 30°, notamment inférieur à 5°.

Selon un aspect additionnel de la présente invention, la plage de fréquence prédéterminée est supérieure à 60GHz, notamment entre 75 et 80GHz, notamment 77GHz. La plage de fréquence prédéterminée peut également être comprise entre 120 et 160 GHz, notamment 140 GHz.

Selon un aspect supplémentaire de la présente invention, la première et la deuxième antennes sont configurées pour être disposées sur une pièce de carrosserie comprenant une paroi réalisée en matière plastique.

Selon un autre aspect de la présente invention, l'unité électronique est configurée pour être positionné à distance de la pièce de carrosserie.

Selon un aspect additionnel de la présente invention, le système radar comprend :
- une antenne émettrice configurée pour émettre une onde électromagnétique émise par l'unité électronique dans une direction prédéterminée,
- une première et une deuxième antennes réceptrices configurées pour recevoir l'onde électromagnétique émise par l'antenne émettrice et réfléchie par un obstacle et pour propager l'onde électromagnétique réfléchie reçue vers l'unité électronique, l'antenne émettrice et les antennes réceptrices étant disposées sur une pièce de carrosserie comprenant une paroi réalisée en matière plastique, notamment sur un pare-chocs.

Selon un autre aspect de la présente invention, la pièce de carrosserie s'étend selon la largeur du véhicule et dans lequel les antennes sont disposées dans des zones différentes de la pièce de carrosserie, les différentes zones étant décalées les unes des autres selon la largeur du véhicule et dans lequel l'antenne émettrice est disposée dans une zone centrale par rapport aux zones associées aux antennes réceptrices.

Selon un aspect additionnel de la présente invention, la première antenne réceptrice définit un premier cône de réception autour d'un axe central de réception formant un angle azimutal inférieur à 5°, notamment 0°, par rapport à une direction d'avancement du véhicule, la deuxième antenne réceptrice définit un deuxième cône de réception autour d'un axe central de réception formant un angle azimutal supérieur à 20°, notamment 40°, par rapport à une direction d'avancement du véhicule et l'antenne émettrice définit un cône d'émission autour d'un axe central d'émission formant un angle azimutal compris entre 0° et 10° par rapport à une direction d'avancement du véhicule.

La présente invention concerne également une pièce de carrosserie comprenant un système radar tel que décrit précédemment.

Selon un aspect additionnel de la présente invention, la pièce de carrosserie comprend au moins une paroi réalisée en matière plastique, une antenne émettrice reliée à l'unité électronique via un premier guide d'onde et configurée pour émettre une onde électromagnétique émise par l'unité électronique dans une direction prédéterminée, une antenne réceptrice reliée à l'unité électronique via un deuxième guide d'onde, ladite antenne réceptrice étant configurée pour recevoir l'onde électromagnétique émise par l'antenne émettrice et réfléchie par un obstacle et pour propager l'onde électromagnétique réfléchie reçue vers l'unité électronique, lesdites antennes émettrice et réceptrice étant disposées derrière la paroi en matière plastique.

Selon un autre aspect de la présente invention, l'antenne émettrice et l'antenne réceptrice sont disposées dans une zone uniforme de la pièce de carrosserie. La zone uniforme correspond à une zone ayant une épaisseur constante et constituée du même matériau ou des mêmes couches de matériaux, les différentes couches ayant les mêmes épaisseurs.

Selon un aspect supplémentaire de la présente invention, la pièce de carrosserie est un pare-chocs avant d'un véhicule, notamment terrestre, à moteur et comprend une première antenne réceptrice disposée dans une zone centrale du pare-chocs et dont l'axe central du cône de réception est orienté selon une direction d'avancement du véhicule, une deuxième antenne réceptrice disposée dans une zone latérale du pare-chocs et dont l'axe central du cône de réception est orienté selon un angle azimutal supérieur à 30° par rapport à la direction d'avancement du véhicule et une antenne émettrice est disposée dans une zone intermédiaire située entre la zone centrale et la zone latérale, l'axe central du cône d'émission formant un angle azimutal compris entre 0 et 30° par rapport à la direction d'avancement du véhicule.

Selon un aspect additionnel de la présente invention, les antennes ont une forme allongée et la longueur des différentes antennes peut être différente d'une antenne à l'autre. Au moins une des antennes a une longueur différente de la longueur des autres antennes.

La présente invention concerne également un véhicule terrestre à moteur comprenant une pièce carrosserie telle que décrite précédemment.

### Brève description des figures

L'invention sera mieux comprise à la lecture de la description qui va suivre donnée uniquement à titre d'exemple et faite en se référant aux dessins annexés dans lesquels :
[Fig. 1] est un schéma d'un système radar selon un mode de réalisation de la présente invention ;
[Fig. 2] est une vue en perspective de deux antennes du système radar de la figure 1 ;
[Fig. 3] est une vue de dessus de deux antennes disposées sur la face arrière d'une pièce de carrosserie ;
[Fig. 4] est une vue de côté d'une antenne disposée sur une pièce de carrosserie ;
[Fig. 5] est une vue d'une projection sur un plan YZ de deux antennes disposées sur une pièce de carrosserie ;
[Fig. 6] est une vue de dessus d'une pièce de carrosserie comprenant un système radar avec trois antennes ;
[Fig. 7] est une vue en perspective d'un véhicule automobile comprenant un système radar selon la présente invention.
[Fig. 8] est une vue de dessus d'un véhicule automobile comprenant un système radar selon la présente invention.

### Description détaillée

Dans ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

D'autres part, dans le cadre de la présente description, les orientations s'entendent par rapport à un trièdre XYZ lié au véhicule dans lequel l'axe X correspond à la direction d'avancement normale du véhicule, l'axe Y correspond à un axe transverse du véhicule et l'axe Z correspond à la direction opposée à la gravité lorsque le véhicule repose sur une surface plane. Le plan XY forme alors un plan horizontal et l'axe Z correspond à une direction verticale. Pour une direction D quelconque, son azimut est l'angle formé par sa projection dans le plan XY avec l'axe X, son élévation est l'angle formé par sa projection dans le plan XZ avec l'axe X. L'axe X correspond à la valeur 0° pour les angles d'azimut (dans le plan XY) et d'élévation (dans le plan XZ).

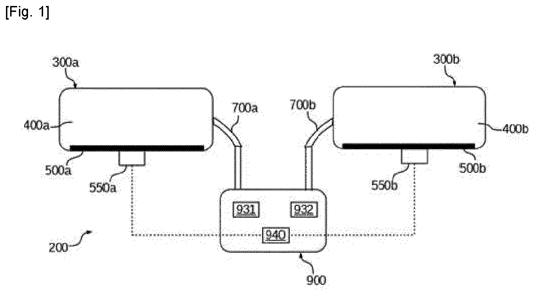

La présente invention concerne un système radar pour véhicule à moteur, notamment pour un véhicule automobile mais l'invention peut aussi s'appliquer à d'autres types de véhicules à moteur, notamment terrestres ou volants. La figure 1 représente un schéma d'un système radar 200 selon un mode de réalisation de la présente invention. Le système radar 200 comprend une unité électronique 900 comprenant un émetteur primaire 931 configuré pour émettre une onde électromagnétique dans une plage de fréquence prédéterminée et un récepteur primaire 932 configuré pour recevoir une onde électromagnétique dans la plage de fréquence prédéterminée. La plage de fréquence prédéterminée correspond à des valeurs supérieures à 60 GHZ, notamment entre 75 et 80 GHZ, par exemple 77 GHz qui est la valeur standardisée des dispositifs radars automobiles. Des fréquences comprises entre 120 et 160 GHz, notamment 140GHz sont également possibles. L'unité électronique 900 comprend également une électronique de contrôle 940 configurée pour piloter l'émetteur 931 et le récepteur 932.

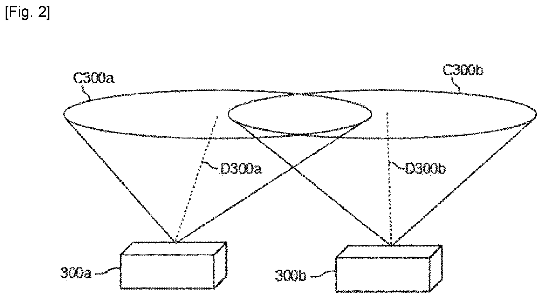

Le système radar 200 comprend également une première antenne directive 300a comprenant une première cavité 400a réfléchissante aux ondes électromagnétiques dans laquelle est positionnée une première métasurface 500a. La cavité réfléchissante 400a correspond à un volume configuré pour réfléchir des ondes électromagnétiques aux limites du volume. Les surfaces réfléchissantes sont par exemple réalisées par des surfaces métalliques. La cavité réfléchissante 400a comprend également des portions non réfléchissantes disposées en regard de la pièce de carrosserie pour permettre l'émission et/ou la réception d'une onde électromagnétique dans une direction prédéterminée. La direction prédéterminée correspond à un cône C300a d'émission et/ou de réception autour d'un premier axe central D300a comme représenté sur la figure 2. Le premier axe central D300a s'étend par exemple dans une direction perpendiculaire au plan formé par la métasurface et/ou par une face de sortie de la première antenne directive 300a (la première antenne directive 300a a par exemple une forme parallélépipédique et la face de sortie correspond à l'une des faces du parallélépipède). La forme du cône d'émission et/ou de réception C300a dépend notamment de la forme de la métasurface 500a. Avec une métasurface 500a de forme allongée, par exemple rectangulaire, le cône d'émission et/ou de réception C300a présente par exemple une section de forme allongée également, par exemple de forme ovale ou oblongue, dont le grand axe correspond à l'axe longitudinal de la métasurface 500a. Une électronique de contrôle 550a est par exemple associée à la métasurface 500a et connectée à l'électronique de contrôle 940 de l'unité électronique 900.

La première antenne 300a est reliée à l'unité électronique 900 via un premier guide d'onde 700a. Le premier guide d'onde 700a permet de propager une onde électromagnétique émise par l'émetteur 931 de l'unité électronique 900 vers la première antenne 300a et/ou de propager une onde électromagnétique reçue par la première antenne 300a vers le récepteur 932 de l'unité électronique 900.

Le système radar 200 comprend également une deuxième antenne directive 300b avec une deuxième direction prédéterminée correspondant à un deuxième cône C300b d'émission et/ou de réception autour d'un deuxième axe central D300b (cf.fig.2). La deuxième antenne 300b comprenant une deuxième cavité 400b réfléchissante aux ondes électromagnétiques dans laquelle est positionnée une deuxième métasurface 500b. Une électronique de contrôle 550b est par exemple associée à la métasurface 500b et connectée à l'électronique de contrôle 940 de l'unité électronique 900. Les éléments constitutifs de la deuxième antenne 300b peuvent être similaires aux éléments constitutifs de la première antenne 300a. Les deux antennes 300a et 300b peuvent être identiques ce qui permet de standardiser la production et ainsi réduire les coûts.

Cependant, la deuxième antenne 300b peut avoir des dimensions différentes de la première antenne 300a. De plus, les orientations, notamment dans la direction azimutale, de la première 300a et de la deuxième 300b antennes peuvent être différentes de sorte que la première et la deuxième direction prédéterminée peuvent être différentes.

La deuxième antenne 300b est reliée à l'unité électronique 900 via un deuxième guide d'onde 700b. Le deuxième guide d'onde 700b permet de propager une onde électromagnétique émise par l'émetteur 931 de l'unité électronique 900 vers la deuxième antenne 300b et/ou de propager une onde électromagnétique reçue par la deuxième antenne 300b vers le récepteur 932 de l'unité électronique 900.
Comme représenté sur la figure 2, les antennes 300a et 300b peuvent avoir une forme allongée correspondant à la forme de la métasurface 500a, 500b et le cône C300a, C300b d'émission et/ou de réception associé à l'antenne a par exemple une section de forme oblongue dont le grand axe correspond à l'axe longitudinal de l'antenne 300a, 300b et est proportionnel à la grande dimension de la métasurface 500a, 500b. L'angle d'émission et/ou de réception est par exemple compris entre 80 et 110°, notamment d'environ 90° (+/-45° par rapport à l'axe central D300a, D300b) selon le grand axe de la forme oblongue et d'environ 20° (+/-10° par rapport à l'axe central D300a, D300b) selon le petit axe de la forme oblongue.

Dans le cas où la première antenne 300a est émettrice et la deuxième antenne 300b est réceptrice, l'écart angulaire entre le premier axe central D300a et le deuxième axe central D300b (mesuré dans le plan défini par les directions D300a et D300b) est de préférence environ égal à 30° de manière à limiter les pertes et maximiser la portée de la détection radar.

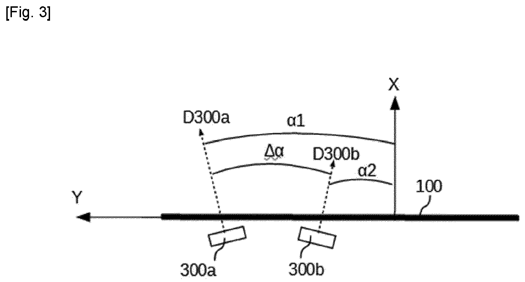

Dans le cas d'une implantation dans un véhicule à moteur 1 tel qu'un véhicule automobile et notamment sur une pièce de carrosserie frontale 100 tel qu'un pare-chocs avant ou une calandre comme représenté en projection sur la vue de dessus de la figure 3, l'écart angulaire Δα entre l'angle d'azimut α1 du premier axe central D300a et l'angle d'azimut α2 du deuxième axe central D300b est, de préférence, inférieur ou égal à 30°, par exemple égal à 30° de manière à optimiser la détection.

Pour une détection latérale pour laquelle la portée requise est moins importante, un écart d'angle azimutal Δα entre le premier axe central D300a et le deuxième axe central D300b supérieur à 30°, notamment 40°, peut être utilisé.

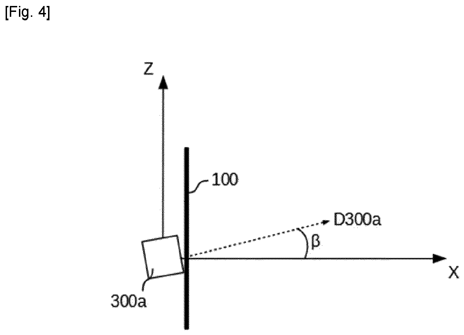

Afin de limiter les détections non pertinentes, par exemple la détection d'un pont ou d'un trottoir dans le cas d'un véhicule automobile , comme représenté en projection sur la figure 4, l'angle d'élévation β du premier ou du deuxième axe central D300a, D300b est inférieur à 10° (+/-5° par rapport à la direction horizontale), de préférence inférieur à 5° (+/-2,5° par rapport à la direction horizontale).

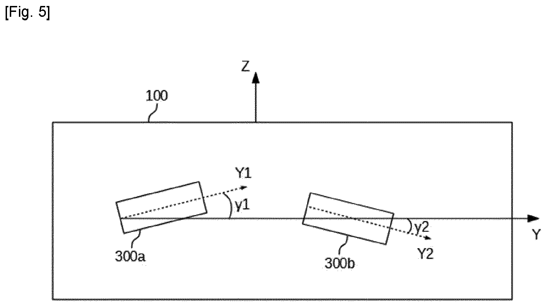

De plus, toujours pour limiter les détections non pertinentes, comme représenté sur la vue en projection de face de la figure 5, l'angle d'assiette γ1 ou γ2 entre la direction longitudinale de l'antenne Y1 ou Y2 (correspondant au grand axe de la section du cône d'émission ou de réception associé à l'antenne) avec la direction horizontale est inférieur à 30°, notamment inférieur à 5°. Les angles d'assiette des antennes 300a, 300b seront choisis sensiblement égaux pour maximiser la portée de détection. La différence entre les angles d'assiette des deux antennes 300a et 300b sera par exemple inférieur à 30°, notamment inférieur à 5°.

Les antennes 300a, 300b sont de préférence placées derrière une zone uniforme de la pièce de carrosserie 100, c'est-à-dire ayant une composition uniforme et une épaisseur constante, de manière à limiter les réflexions parasites de l'onde électromagnétique. Pour cette raison, on évitera si possible de placer l'antenne à cheval entre deux pièces de carrosserie 100.

La première antenne 300a peut être une antenne émettrice utilisée seulement pour l'émission d'une onde électromagnétique et la deuxième antenne 300b peut être une antenne réceptrice utilisée seulement pour la réception d'une onde électromagnétique. Dans ce cas, l'émission et la réception peuvent être continues ce qui permet d'obtenir une détection continue. L'antenne réceptrice 300b est alors configurée pour détecter l'onde électromagnétique émise par l'antenne émettrice 300a et réfléchie par un obstacle situé dans le cône d'émission C300a de l'antenne émettrice 300a vers le cône de réception C300b de l'antenne réceptrice 300b.

Dans ce cas, la différence d'angle d'assiette entre la direction longitudinale Y1 de la première antenne 300a et la direction longitudinale Y2 de la deuxième antenne 300b est de préférence inférieur à 30°, notamment inférieur à 10°, par exemple 0°, de manière à limiter les pertes entre l'émission et la réception et ainsi maximiser la portée de détection.

Les antennes 300a, 300b et notamment les métasurfaces 500a, 500b sont également placées au plus près de la surface interne de la pièce de carrosserie 100 afin de limiter les potentielles réflexions parasites.

L'utilisation d'une première 300a et d'une deuxième 300b antennes d'un même système radar 200 ayant des orientations différentes permet également d'augmenter le champ de détection par rapport à l'utilisation d'une antenne unique.

Par ailleurs, la configuration du système radar 200 permet de positionner les antennes 300a, 300b au plus près de la surface interne de la pièce de carrosserie 100 de manière à limiter les pertes ou les risque de réflexion sur la pièce de carrosserie 100 tandis que l'unité électronique 900 peut être disposée plus en retrait par rapport à la pièce de carrosserie 100 de manière à la protéger d'un éventuel choc sur la pièce de carrosserie 100. Cependant, la distance entre l'unité électronique 900 et les antennes 300a, 300b peut être limitée, par exemple inférieure à 500mm de manière à limiter les pertes ou atténuations lors de la propagation de l'onde électromagnétique dans les guides d'onde 700a, 700b.

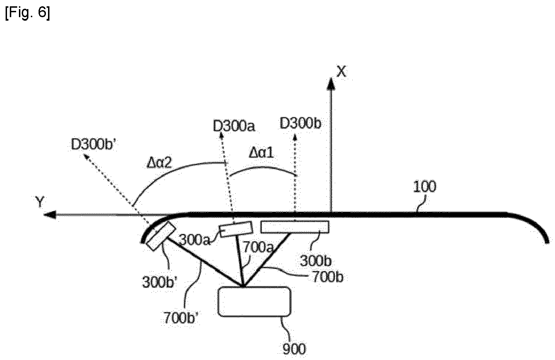

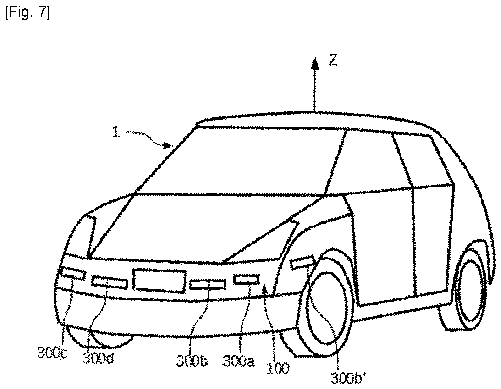

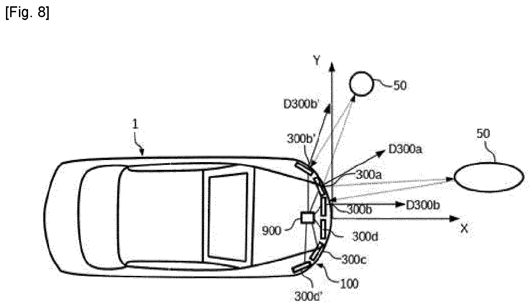

Selon un mode de réalisation particulier représenté sur les figures 6 à 8, le système radar 200 comprend une antenne émettrice 300a et deux antennes réceptrices 300b et 300b' disposées sur un côté du pare-chocs avant 100 d'un véhicule à moteur 1. Les antennes 300a, 300b, 300b' sont par exemple fixées à l'arrière de la peau du pare-chocs 100. L'unité électronique 900 est par exemple disposée plus en retrait par rapport au pare-chocs 100 de manière à être protégée en cas de choc. L'antenne émettrice 300a et la première antenne réceptrice 300b sont par exemple positionnées dans une partie frontale du pare-chocs 100, c'est-à-dire la partie du pare-chocs orientée sensiblement perpendiculairement à la direction X de déplacement du véhicule 1 et située entre les phares du véhicule 1 tandis que la deuxième antenne réceptrice 300b' est disposée dans une partie latérale du pare-chocs 100, ici la partie gauche, dont l'orientation est différente de la partie frontale, par exemple latéralement au-delà de la zone délimitée par les phares du véhicule 1 dans l'exemple des figures 7 et 8. La partie latérale du pare-chocs forme par exemple un angle inférieur à 45° avec la direction X d'avancement du véhicule 1.

L'antenne émettrice 300a est disposée entre les deux antennes réceptrices 300b et 300b' dans la direction latérale, c'est-à-dire selon l'axe Y. Ainsi, les antennes 300a, 300b et 300b' sont disposées dans des zones différentes de la pièce de carrosserie 100, les différentes zones étant décalées les unes des autres selon la largeur du véhicule, c'est-à-dire selon l'axe Y, et l'antenne émettrice 300a est disposée dans une zone centrale par rapport aux zones associées aux antennes réceptrices 300b et 300b' ce qui permet d'obtenir un champ de détection important pour le système radar 200. L'axe central D300b du cône de réception de la première antenne réceptrice 300b est orienté en azimut dans une direction correspondant sensiblement à la direction X d'avancement du véhicule, l'écart angulaire en azimut avec la direction X est par exemple inférieur à 5°, notamment égal à 0° de manière à pouvoir réaliser une détection frontale des obstacles 50 situés devant le véhicule 1 comme représenté sur la figure 8.

L'angle d'élévation de l'axe central D300b est sensiblement confondu avec la direction horizontale, l'écart angulaire entre l'axe central D300b et la direction horizontale (plan XY) est notamment inférieur à 5°. L'antenne émettrice 300a peut avoir sensiblement la même orientation que la première antenne réceptrice 300b ou peut être décalée angulairement en azimut du côté de la deuxième antenne réceptrice 300b'. La différence d'angle azimutal Δα1 entre l'axe central D300a du cône d'émission de l'antenne émettrice 300a et l'axe central D300b du cône de réception de la première antenne réceptrice 300b est par exemple inférieur à 30°, par exemple 20° de manière à optimiser la portée de détection dans la direction frontale X du véhicule 1. L'angle d'élévation de l'axe central D300a du cône d'émission C300a de l'antenne émettrice 300a est sensiblement confondu avec la direction horizontale, l'angle d'élévation de l'axe central D300a est notamment inférieur à 5°, par exemple égal à 0°. La deuxième antenne réceptrice 300b' a une orientation azimutale différente de la première antenne réceptrice 300b pour élargir le champ de détection et permettre une détection des obstacles 50 situés sur le côté du véhicule 1. La différence d'angle azimutal Δα2 entre l'axe central D300b' du cône de réception de la deuxième antenne réceptrice 300b' et l'axe central D300a de l'antenne émettrice 300a est par exemple supérieur à 30 °, par exemple environ 40° ce qui permet d 'élargir le champ de détection du système radar 200. L'angle d'élévation de l'axe central D300b' du cône de réception de la deuxième antenne réceptrice 300b' est sensiblement confondu avec la direction horizontale, l'angle entre l'axe central D300b' et la direction horizontale est notamment inférieur à 5°, par exemple égal à 0°.

Concernant la position en hauteur des antennes 300a, 300b et 300b' au niveau du pare-chocs 100, les antennes 300a, 300b et 300b' sont de préférence positionnées au-dessus d'un plan horizontal passant par le point le plus haut de la poutre de chocs et de son absorbeur ou en dessous d'un plan horizontal passant par le point le plus bas de la poutre de chocs et de son absorbeur.

Dans l'exemple de la figure 6, la première antenne réceptrice 300b a une longueur supérieure à l'antenne émettrice 300a et la deuxième antenne réceptrice 300b' (qui peuvent, elles, avoir la même longueur). Une longueur d'antenne supérieure correspond à une métasurface de plus grande dimension permettant d'obtenir une ouverture plus importante et donc une résolution spatiale améliorée permettant de discriminer deux éléments distincts situés à une distance importante, par exemple 100m. La première antenne réceptrice 300b de dimension supérieure permet ainsi d'accroître la résolution spatiale dans la direction frontale correspondant à la direction X d'avancement du véhicule 1. Le cône de réception de la deuxième antenne réceptrice 300b' peut comprendre une zone de recouvrement avec le cône de réception de la première antenne réceptrice 300b. Un tel recouvrement peut notamment permettre de détecter un dysfonctionnement de l'une des antennes réceptrices 300b, 300b'. De plus, un tel recouvrement permet de réaliser un suivi d'un obstacle se déplaçant dans le champ de détection couvert par l'ensemble du système radar 200 comprenant l'antenne émettrice 300a et les deux antennes réceptrices 300b et 300b'.

Ainsi, en fonctionnement, l'antenne émettrice 300a émet une onde électromagnétique dans son cône d'émission. Cette onde électromagnétique est réfléchie par des obstacles 50, tels que d'autres véhicules ou des piétons ou des éléments urbains fixes, et renvoyée vers le cône de réception de la première antenne réceptrice 300b pour les obstacles situés devant le véhicule 1 et vers le cône de réception de la deuxième antenne réceptrice 300b' pour les obstacles situés sur le côté gauche du véhicule 1 comme représenté sur la figure 8.

D'autre part, les antennes 300a, 300b, 300b' peuvent être reconfigurées de sorte qu'une antenne émettrice 300a peut être reconfigurée pour permettre une réception de l'onde électromagnétique et inversement, une antenne réceptrice 300b, 300b' peut être reconfigurée pour émettre une onde électromagnétique. Ainsi, par exemple, en cas de dysfonctionnement de l'antenne émettrice 300a, la première antenne réceptrice 300b peut être reconfigurée en antenne émettrice afin de permettre de préserver une fonction de détection en association avec la deuxième réceptrice 300b'. Cependant, la détection est alors dégradée, la portée et/ou le champ de détection sont par exemple réduits par rapport à la configuration initiale.

Le système radar 200 peut également comprendre un nombre d'antennes réceptrices plus important, par exemple pour permettre une détection du côté droit du véhicule 1. Le système radar 200 peut également comprendre plusieurs antennes émettrices. Dans le cas des figures 7 et 8, le système radar 200 comprend six antennes, une première antenne émettrice 300a située du côté gauche du pare-chocs avant 100, une deuxième antenne émettrice 300c située du côté droit du pare-chocs avant 100, deux antennes réceptrices 300b et 300b' situées de part et d'autre de l'antenne émettrice 300a et deux antennes 300d et 300d' situées de part et d'autre de l'antenne 300c, les antennes 300c, 300d et 300d' sont par exemple positionnées de manière symétrique des antennes 300a, 300b et 300b' par rapport au plan central XZ du véhicule 1. Un tel système radar 200 permet par exemple d'avoir un champ de détection à 180°, voire 200°, autour du pare-chocs avant 100. De plus, l'utilisation d'une unité électronique 900 commune aux différentes antennes permet de réaliser un suivi d'un objet ou d'une personne se déplaçant dans le champ de détection des différentes antennes 300a, 300b, 300b', 300c, 300d, 300d'. L'utilisation d'une unité électronique 900 commune permet également de limiter au maximum les latences dans la détection.

De plus, le système radar 200 peut également comprendre une pluralité d'unités électroniques 900 et les antennes 300a, 300b peuvent être reliées à différentes unités électroniques 900. Dans les modes de réalisation décrits, une unité électronique 900 comprend un unique émetteur 931 et un unique récepteur 932.

La présente invention concerne également une pièce de carrosserie 100 comprenant un système radar 200 tel que décrit précédemment. La pièce de carrosserie 100 comprend une paroi en matière plastique derrière et sur laquelle une ou plusieurs antennes sont positionnées et fixées. De préférence, la paroi en matière plastique est homogène afin de ne pas perturber la transmission de l'onde électromagnétique. Par homogène, on entend ici que, pour la paroi présente devant une même antenne, l'épaisseur est sensiblement constante, que le même matériau ou les mêmes couches de matériaux sont utilisées et que la paroi est pleine (sans ajours comme pour une grille d'entrée d'air). Pour les mêmes raisons, une antenne 300a, 300b, 300b', 300c, 300d, 300d' sera de préférence placée derrière une pièce de carrosserie 100 unique et non à cheval entre différentes pièces de carrosserie 100. De préférence également, la courbure de la paroi en plastique en regard de l'antenne est réduite, le rayon de courbure est par exemple supérieur à 500mm de manière à limiter les espaces pouvant apparaître entre l'antenne qui peut être plane et la pièce de carrosserie incurvée. La pièce de carrosserie 100 peut être constituée de plusieurs composants en matière plastique, les antennes pouvant être réparties sur les différents composants de la pièce de carrosserie 100. Par exemple, pour un pare-chocs avant, une antenne peut-être située derrière le plastron central et une autre antenne derrière la crosse de pare-chocs située à côté de l'aile. L'unité électronique 900 peut également être fixée sur la pièce de carrosserie 100 mais pas nécessairement contre la paroi en matière plastique.

La pièce de carrosserie 100 peut être un pare-chocs avant mais peut également être un pare-chocs arrière, une aile, une portière latérale, un hayon, un pied milieu/avant/arrière, une arche latérale ou traverse avant/arrière de toit, ou tout autre pièce de carrosserie comprenant une paroi en matière plastique permettant une propagation de l'onde électromagnétique émise par le système radar 200.

La présente invention concerne également un véhicule à moteur 1, notamment un véhicule automobile, comprenant une pièce de carrosserie 100 telle que décrite précédemment. Le véhicule 1 peut comprendre différentes pièces de carrosserie 100 comprenant différents systèmes radars 1 pour permettre une détection d'obstacles autour de l'ensemble du véhicule 1.

La pièce de carrosserie 100 peut être choisie parmi un pare-chocs avant, un pare-chocs arrière, une aile, une portière latérale, un hayon, un pied milieu/avant/arrière, une arche latérale, une traverse avant/arrière de toit, ou tout autre pièce de carrosserie 100 comprenant une paroi en matière plastique permettant une propagation de l'onde électromagnétique émise par le système radar 200.

Le véhicule 1 peut également comprendre différents systèmes radars 1 dont les antennes 300a, 300b sont réparties sur différentes pièces de carrosserie 100 du véhicule 1 pour permettre une détection d'obstacles autour de l'ensemble du véhicule 1.

### Liste des références

1 : véhicule
50 : obstacle
100 : pièce de carrosserie
200 : système radar
300a, 300b, 300b' : antennes directives
400a, 400b : cavités réfléchissantes
500a, 500b : métasurfaces
550a, 550b : électronique de contrôle de la métasurface associée
700a, 700b : guides d'onde
900 : unité électronique
931 : émetteur primaire
932 : récepteur primaire
940 : électronique de contrôle
C300a, C300b : cône d'émission et/ou de réception de l'antenne directive associée
D300a, D300b, D300b' : axe central d'émission et/ou de réception de l'antenne directive associée

## Revendications

1. Système radar (200) pour véhicule à moteur (1) comprenant :
- une unité électronique (900) configurée pour émettre et recevoir une onde électromagnétique dans une plage de fréquence prédéterminée,
- une première antenne directive (300a) comprenant une première cavité réfléchissante (400a) aux ondes électromagnétiques dans laquelle est positionnée une première métasurface (500a), **caractérisé en ce que** ladite première antenne (300a) étant configurée pour être reliée à l'unité électronique (900) via un premier guide d'onde (700a) et pour transmettre une onde électromagnétique, émise par l'unité électronique (900) et propagée via le premier guide d'onde (700a), dans une première direction prédéterminée et/ou pour propager une onde électromagnétique reçue depuis la première direction prédéterminée vers l'unité électronique (900) via le premier guide d'onde (700a),
une deuxième antenne directive (300b) comprenant une deuxième cavité réfléchissante (400b) aux ondes électromagnétiques dans laquelle est positionnée une deuxième métasurface (500b), ladite deuxième antenne (300b) étant configurée pour être reliée à l'unité électronique (900) via un deuxième guide d'onde (700b) et pour transmettre une onde électromagnétique, émise par l'unité électronique (900) et propagée via le deuxième guide d'onde (700b), dans une deuxième direction prédéterminée et/ou pour propager une onde électromagnétique reçue depuis la deuxième direction prédéterminée vers l'unité électronique (900) via le deuxième guide d'onde (700b)dans lequel la première antenne (300a) dite antenne émettrice est configurée pour émettre une onde électromagnétique issue de l'unité électronique (900) et propagée via le premier guide d'onde (700a) dans la première direction prédéterminée et la deuxième antenne (300b) dite antenne réceptrice est configurée pour recevoir l'onde électromagnétique émise par l'antenne émettrice (300a) et réfléchie par un obstacle dans la deuxième direction prédéterminée et pour propager l'onde électromagnétique reçue vers l'unité électronique (900) via le deuxième guide d'onde (700b).

2. Système radar (200) selon la revendication 1 dans lequel la première direction prédéterminée correspond à un cône d'émission (C300a) autour d'un axe central d'émission (D300a) et la deuxième direction prédéterminée correspond à un cône de réception (C300b) autour d'un axe central de réception (D300b).

3. Système radar (200) selon la revendication précédente dans lequel l'écart en azimut entre l'axe central d'émission (D300a) et l'axe central de réception (D300b) est inférieure à 30°.

4. Système radar (200) selon la revendication 2 ou 3 dans lequel l'écart en élévation entre l'axe central d'émission (D300a) et une direction horizontale d'une part et entre l'axe central de réception (D300b) et une direction horizontale d'autre part est inférieur à 5°, notamment égale à 0°.

5. Système radar (200) selon l'une des revendications 2 à 4 dans lequel les sections du cône d'émission (C300a) et du cône de réception (C300b) ont une forme allongée, notamment oblongue, et dans lequel les antennes (300a, 300b) sont disposées de sorte que, d'une part, l'angle d'assiette de l'antenne formé par l'écart angulaire entre le grand axe de la forme allongée et une direction horizontale est inférieur à 30°, notamment inférieur à 5° et d'autre part l'écart angulaire entre l'angle d'assiette de la première antenne (300a) et de la deuxième antenne (300b) est inférieur à 30°, notamment inférieur à 5°.

6. Système radar (200) selon l'une des revendications précédentes dans lequel la plage de fréquence prédéterminée est supérieure à 60GHz, notamment entre 75 et 80GHz, notamment 77GHz.

7. Système radar (200) selon l'une des revendications précédentes dans lequel la première (300a) et la deuxième (300b) antennes sont configurées pour être disposées sur une pièce de carrosserie (100) comprenant une paroi réalisée en matière plastique.

8. Système radar (200) selon la revendication précédente dans lequel l'unité électronique (900) est configurée pour être positionnée à distance de la pièce de carrosserie (100).

9. Système radar (200) selon l'une des revendications précédentes comprenant :
- une antenne émettrice (300a) configurée pour émettre une onde électromagnétique émise par l'unité électronique (900) dans une direction prédéterminée,
- une première (300b) et une deuxième (300b') antennes réceptrices configurées pour recevoir l'onde électromagnétique émise par l'antenne émettrice (300a) et réfléchie par un obstacle et pour propager l'onde électromagnétique réfléchie reçue vers l'unité électronique (900), l'antenne émettrice (300a) et les antennes réceptrices (300b, 300b') étant disposées sur une pièce de carrosserie (100) comprenant une paroi réalisée en matière plastique, notamment sur un pare-chocs.

10. Système radar (200) selon la revendication précédente dans lequel la pièce de carrosserie (100) s'étend selon la largeur du véhicule et dans lequel les antennes (300a, 300b, 300b') sont disposées dans des zones différentes de la pièce de carrosserie (100), les différentes zones étant décalées les unes des autres selon la largeur du véhicule et dans lequel l'antenne émettrice (300a) est disposée dans une zone centrale par rapport aux zones associées aux antennes réceptrices (300b, 300b').

11. Système radar (200) selon la revendication 9 ou 10 dans lequel la première antenne réceptrice (300b) définit un premier cône de réception autour d'un axe central de réception (D300b) formant un angle azimutal inférieur à 5°, notamment 0°, par rapport à une direction (X) d'avancement du véhicule, la deuxième antenne réceptrice (300b') définit un deuxième cône de réception autour d'un axe central de réception (D300b') formant un angle azimutal supérieur à 20°, notamment 40°, par rapport à une direction (X) d'avancement du véhicule et l'antenne émettrice (300a) définit un cône d'émission autour d'un axe central d'émission (D300a) formant un angle azimutal compris entre 0° et 10° par rapport à une direction (X) d'avancement du véhicule.

12. Pièce de carrosserie (100) comprenant un système radar (200) selon l'une des revendications précédentes.

13. Pièce de carrosserie (100) selon la revendication précédente comprenant au moins une paroi réalisée en matière plastique, une antenne émettrice (300a) reliée à l'unité électronique (900) via un premier guide d'onde (700a) et configurée pour émettre une onde électromagnétique émise par l'unité électronique (900) dans une direction prédéterminée, une antenne réceptrice (300b) reliée à l'unité électronique (900) via un deuxième guide d'onde (700b), ladite antenne réceptrice (300b) étant configurée pour recevoir l'onde électromagnétique émise par l'antenne émettrice (300a) et réfléchie par un obstacle et pour propager l'onde électromagnétique réfléchie reçue vers l'unité électronique (900), lesdites antennes émettrice (300a) et réceptrice (300b) étant disposées derrière la paroi en matière plastique.

14. Pièce de carrosserie (100) selon la revendication précédente dans laquelle l'antenne émettrice (300a) et l'antenne réceptrice (300b) sont disposées dans une zone uniforme de la pièce de carrosserie (100)

15. Pièce de carrosserie (100) selon l'une des revendications 12 à 14, dans laquelle la pièce de carrosserie (100) est un pare-chocs avant d'un véhicule, notamment terrestre, à moteur et comprend une première antenne réceptrice (300b) disposée dans une zone centrale du pare-chocs et dont l'axe central (D300b) du cône de réception est orienté selon une direction (X) d'avancement du véhicule, une deuxième antenne réceptrice (300b') disposée dans une zone latérale du pare-chocs et dont l'axe central (D300b') du cône de réception est orienté selon un angle azimutal supérieur à 30° par rapport à la direction (X) d'avancement du véhicule et une antenne émettrice (300a) est disposée dans une zone intermédiaire située entre la zone centrale et la zone latérale, l'axe central (D300a) du cône d'émission formant un angle azimutal compris entre 0 et 30° par rapport à la direction (X) d'avancement du véhicule.

16. Pièce de carrosserie (100) selon l'une des revendications 12 à 15 dans laquelle les antennes (300a, 300b, 300b') ont une forme allongée et dans laquelle la longueur des différentes antennes (300a, 300b, 300b') peut être différente d'une antenne à l'autre.

17. Véhicule terrestre à moteur (1) comprenant une pièce carrosserie (100) selon l'une des revendications précédentes.

## Patentansprüche

1. Radarsystem (200) für ein Kraftfahrzeug (1), aufweisend:
- eine Elektronikeinheit (900), die zum Senden und Empfangen einer elektromagnetischen Welle in einem vorgegebenen Frequenzbereich ausgelegt ist,
- eine erste Richtantenne (300a) mit einem ersten reflektierenden Hohlraum (400a) für elektromagnetische Wellen, in dem eine erste Metafläche (500a) angeordnet ist, **dadurch gekennzeichnet, dass** die erste Antenne (300a) konfiguriert ist, über einen ersten Wellenleiter (700a) mit der elektronischen Einheit (900) verbunden zu sein und eine von der elektronischen Einheit (900) ausgesendete und über den ersten Wellenleiter (700a) fortgeführte elektromagnetische Welle in einer ersten vorgegebenen Richtung zu auszusenden und/oder eine aus der ersten vorgegebenen Richtung empfangene elektromagnetische Welle über den ersten Wellenleiter (700a) zur elektronischen Einheit (900) weiterzuleiten,
- eine zweite Richtantenne (300b) mit einem zweiten reflektierenden Hohlraum (400b) für elektromagnetische Wellen, in dem eine zweite Metafläche (500b) angeordnet ist, wobei die zweite Antenne (300b) konfiguriert ist, über einen zweiten Wellenleiter (700b) mit der Elektronikeinheit (900) verbunden zu sein und eine von der Elektronikeinheit (900) ausgesendete und über den zweiten Wellenleiter (700b) fortgeführte elektromagnetische Welle in eine zweite vorbestimmte Richtung zu übertragen und/oder eine aus der zweiten vorbestimmten Richtung empfangene elektromagnetische Welle über den zweiten Wellenleiter (700b) weiterzuleiten, wobei die erste Antenne (300a), die als Sendeantenne bezeichnet wird, konfiguriert ist, eine von der elektronischen Einheit (900) ausgehende und über den ersten Wellenleiter (700a) in der ersten vorgegebenen Richtung fortgeführte elektromagnetische Welle zu übertragen, und die zweite Antenne (300b), die als Empfangsantenne bezeichnet wird, konfiguriert ist, die von der Sendeantenne (300a) ausgesendete und von einem Hindernis in der zweiten vorgegebenen Richtung reflektierte elektromagnetische Welle zu empfangen und die empfangene elektromagnetische Welle über den zweiten Wellenleiter (700b) an die elektronische Einheit (900) weiterzuleiten.

2. Radarsystem (200) nach Anspruch 1, wobei die erste vorbestimmte Richtung einem Sendekegel (C300a) um eine zentrale Sendeachse (D300a) entspricht und die zweite vorbestimmte Richtung einem Empfangskegel (C300b) um eine zentrale Empfangsachse (D300b) entspricht.

3. Radarsystem (200) nach dem vorstehenden Anspruch, wobei der Azimutabstand zwischen der zentralen Sendeachse (D300a) und der zentralen Empfangsachse (D300b) kleiner als 30° ist.

4. Radarsystem (200) nach Anspruch 2 oder 3, wobei der Elevationsabstand zwischen der zentralen Sendeachse (D300a) und einer horizontalen Richtung einerseits sowie zwischen der zentralen Empfangsachse (D300b) und einer horizontalen Richtung andererseits kleiner als 5° ist, insbesondere gleich 0°.

5. Radarsystem (200) nach einem der Ansprüche 2 bis 4, bei dem die Querschnitte des Sendekegels (C300a) und des Empfangskegels (C300b) eine längliche, insbesondere oblonge Form aufweisen und bei dem die Antennen (300a, 300b) so angeordnet sind, dass einerseits der Neigungswinkel der Antenne, der durch den Winkelabstand zwischen der Hauptachse der länglichen Form und einer horizontalen Richtung gebildet wird, kleiner als 30° ist, insbesondere kleiner als 5° ist, und andererseits der Winkelabstand zwischen dem Neigungswinkel der ersten Antenne (300a) und dem der zweiten Antenne (300b) kleiner als 30°, insbesondere kleiner als 5°, ist.

6. Radarsystem (200) nach einem der vorstehenden Ansprüche, wobei der vorgegebene Frequenzbereich größer als 60 GHz ist, insbesondere zwischen 75 und 80 GHz, insbesondere 77 GHz.

7. Radarsystem (200) nach einem der vorstehenden Ansprüche, wobei die erste (300a) und die zweite (300b) Antenne konfiguriert ist, um an einem Karosserieteil (100) angeordnet werden können, das eine aus Kunststoff gefertigte Wand aufweist.

8. Radarsystem (200) nach dem vorstehenden Anspruch, wobei die Elektronikeinheit (900) konfiguriert ist, um in einem Abstand zum Karosserieteil (100) positioniert zu werden.

9. Radarsystem (200) nach einem der vorstehenden Ansprüche,
aufweisend:
- eine Sendeantenne (300a), die konfiguriert ist, eine von der Elektronikeinheit (900) ausgesendete elektromagnetische Welle in eine vorbestimmte Richtung auszusenden,
- eine erste (300b) und eine zweite (300b') Empfangsantenne, die konfiguriert sind, die von der Sendeantenne (300a) ausgesendete und von einem Hindernis reflektierte elektromagnetische Welle zu empfangen und die empfangene reflektierte elektromagnetische Welle zur elektronischen Einheit (900) weiterzuleiten,
wobei die Sendeantenne (300a) und die Empfangsantennen (300b, 300b") an einem Karosserieteil (100) angeordnet sind, das eine aus Kunststoff gefertigte Wand aufweist, insbesondere an einer Stoßstange.

10. Radarsystem (200) nach dem vorstehenden Anspruch, wobei sich das Karosserieteil (100) über die Fahrzeugbreite erstreckt und wobei die Antennen (300a, 300b, 300b') in verschiedenen Bereichen des Karosserieteils (100) angeordnet sind, wobei die verschiedenen Bereiche über die Fahrzeugbreite hinweg zueinander versetzt sind und wobei die Sendeantenne (300a) in einem zentralen Bereich in Bezug auf die den Empfangsantennen (300b, 300b) zugeordneten Bereiche angeordnet ist.

11. Radarsystem (200) nach Anspruch 9 oder 10, wobei die erste Empfangsantenne (300b) einen ersten Empfangskegel um eine zentrale Empfangsachse (D300b) definiert, der einen Azimutwinkel von weniger als 5°, insbesondere 0°, in Bezug auf eine Fahrtrichtung (X) des Fahrzeugs bildet, wobei die zweite Empfangsantenne (300b) einen zweiten Empfangskegel um eine Empfangszentralachse (D300b') definiert, der einen Azimutwinkel von mehr als 20°, insbesondere 40°, in Bezug auf eine Fahrtrichtung (X) des Fahrzeugs bildet, und die Sendeantenne (300a) einen Sendekegel um eine zentrale Sendeachse (D300a) definiert, der einen Azimutwinkel zwischen 0° und 10° in Bezug auf eine Fahrtrichtung (X) des Fahrzeugs bildet.

12. Karosserieteil (100) mit einem Radarsystem (200) gemäß einem der vorstehenden Ansprüche.

13. Karosserieteil (100) nach dem vorstehenden Anspruch, aufweisend mindestens eine aus Kunststoff gefertigte Wand, eine Sendeantenne (300a), die über einen ersten Wellenleiter (700a) mit der Elektronikeinheit (900) verbunden ist und konfiguriert ist, eine von der Elektronikeinheit (900) ausgesendete elektromagnetische Welle in einer vorgegebenen Richtung auszusenden, eine Empfangsantenne (300b), die über einen zweiten Wellenleiter (700b) mit der Elektronikeinheit (900) verbunden ist, wobei die Empfangsantenne (300b) konfiguriert ist, die von der Sendeantenne (300a) ausgesendete und von einem Hindernis reflektierte elektromagnetische Welle zu empfangen und die empfangene reflektierte elektromagnetische Welle zur Elektronikeinheit (900) weiterzuleiten, wobei die Sendeantenne (300a) und die Empfangsantenne (300b) hinter der Kunststoffwand angeordnet sind.

14. Karosserieteil (100) nach dem vorstehenden Anspruch, wobei die Sendeantenne (300a) und die Empfangsantenne (300b) in einem einheitlichen Bereich des Karosserieteils (100) angeordnet sind.

15. Karosserieteil (100) nach einem der Ansprüche 12 bis 14, wobei das Karosserieteil (100) eine Frontstoßstange eines Kraftfahrzeugs, insbesondere eines Landfahrzeugs, ist und eine erste Empfangsantenne (300b) aufweist, die in einem zentralen Bereich der Stoßstange angeordnet ist und deren Mittelachse (D300b) des Empfangskegels in Fahrtrichtung (X) des Fahrzeugs ausgerichtet ist, eine zweite Empfangsantenne (300b'), die in einem seitlichen Bereich der Stoßstange angeordnet ist und deren Mittelachse (D300b') des Empfangskegels in einem Azimutwinkel von mehr als 30° zur Fahrtrichtung (X) des Fahrzeugs ausgerichtet ist, sowie eine Sendeantenne (300a), die in einem Zwischenbereich zwischen dem mittleren und dem seitlichen Bereich angeordnet ist, wobei die Mittelachse (D300a) des Sendekegels einen Azimutwinkel zwischen 0 und 30° zur Fahrtrichtung (X) des Fahrzeugs bildet.

16. Karosserieteil (100) nach einem der Ansprüche 12 bis 15, wobei die Antennen (300a, 300b, 300b") eine längliche Form aufweisen und wobei die Länge der verschiedenen Antennen (300a, 300b, 300b) von Antenne zu Antenne unterschiedlich sein kann.

17. Motorisiertes Landfahrzeug (1) aufweisend ein Karosserieteil (100) gemäß einem der vorstehenden Ansprüche.

## Claims

1. A radar system (200) for a motor vehicle (1), comprising:
- an electronic unit (900) configured to transmit and receive an electromagnetic wave within a predetermined frequency range,
- a first directional antenna (300a) comprising a first cavity (400a) reflective of electromagnetic waves, within which a first metasurface (500a) is positioned, **characterised in that** said first antenna (300a) is configured to be connected to the electronic unit (900) via a first waveguide (700a) and to transmit an electromagnetic wave, emitted by the electronic unit (900) and propagated via the first waveguide (700a), in a first predetermined direction and/or to propagate an electromagnetic wave received from the first predetermined direction towards the electronic unit (900) via the first waveguide (700a),
a second directional antenna (300b) comprising a second cavity (400b) that reflects electromagnetic waves, within which a second metasurface (500b) is positioned, said second antenna (300b) being configured to be connected to the electronic unit (900) via a second waveguide (700b) and to transmit an electromagnetic wave, emitted by the electronic unit (900) and propagated via the second waveguide (700b), in a second predetermined direction and/or to propagate an electromagnetic wave received from the second predetermined direction towards the electronic unit (900) via the second waveguide (700b), wherein the first antenna (300a), referred to as the transmitting antenna, is configured to transmit an electromagnetic wave originating from the electronic unit (900) and propagated via the first waveguide (700a) in the first predetermined direction, and the second antenna (300b), referred to as the receiving antenna, is configured to receive the electromagnetic wave transmitted by the transmitting antenna (300a) and reflected by an obstacle in the second predetermined direction, and to propagate the received electromagnetic wave towards the electronic unit (900) via the second waveguide (700b).

2. A radar system (200) according to claim 1, wherein the first predetermined direction corresponds to a transmission cone (C300a) about a central transmission axis (D300a) and the second predetermined direction corresponds to a reception cone (C300b) about a central reception axis (D300b).

3. A radar system (200) according to the preceding claim, in which the azimuth deviation between the central transmission axis (D300a) and the central reception axis (D300b) is less than 30°.

4. A radar system (200) according to claim 2 or 3, in which the elevation deviation between the central transmission axis (D300a) and a horizontal direction on the one hand, and between the central reception axis (D300b) and a horizontal direction on the other hand, is less than 5°, in particular equal to 0°.

5. A radar system (200) according to one of claims 2 to 4, in which the cross-sections of the transmission cone (C300a) and the reception cone (C300b) are elongated, in particular oblong, and in which the antennas (300a, 300b) are arranged such that, on the one hand, the antenna tilt angle, formed by the angular deviation between the major axis of the elongated shape and a horizontal direction, is less than 30°, in particular less than 5°, and, on the other hand, the angular difference between the tilt angle of the first antenna (300a) and that of the second antenna (300b) is less than 30°, in particular less than 5°.

6. A radar system (200) according to one of the preceding claims, in which the predetermined frequency range is greater than 60 GHz, in particular between 75 and 80 GHz, in particular 77 GHz.

7. A radar system (200) according to one of the preceding claims, in which the first (300a) and second (300b) antennas are configured to be mounted on a body panel (100) comprising a wall made of plastic.

8. A radar system (200) according to the preceding claim, in which the electronic unit (900) is configured to be positioned at a distance from the body panel (100).

9. A radar system (200) according to one of the preceding claims, comprising:
- a transmitting antenna (300a) configured to transmit an electromagnetic wave generated by the electronic unit (900) in a predetermined direction,
- a first (300b) and a second (300b') receiving antennae configured to receive the electromagnetic wave emitted by the transmitting antenna (300a) and reflected by an obstacle, and to transmit the received reflected electromagnetic wave to the electronic unit (900), the transmitting antenna (300a) and the receiving antennas (300b, 300b') being arranged on a body panel (100) comprising a wall made of plastic, in particular on a bumper.

10. A radar system (200) according to the preceding claim, in which the body panel (100) extends across the width of the vehicle and in which the antennas (300a, 300b, 300b') are arranged in different zones of the body panel (100), the different zones being offset from one another across the width of the vehicle, and in which the transmitting antenna (300a) is arranged in a central zone relative to the zones associated with the receiving antennas (300b, 300b').

11. A radar system (200) according to claim 9 or 10, in which the first receiving antenna (300b) defines a first reception cone about a central reception axis (D300b) forming an azimuthal angle of less than 5°, in particular 0°, relative to a direction (X) of travel of the vehicle, the second receiving antenna (300b') defines a second receiving cone around a central receiving axis (D300b') forming an azimuthal angle greater than 20°, in particular 40°, relative to a direction (X) of travel of the vehicle; and the transmitting antenna (300a) defines a transmission cone about a central transmission axis (D300a) forming an azimuthal angle of between 0° and 10° relative to a direction (X) of travel of the vehicle.

12. Body panel (100) comprising a radar system (200) according to one of the preceding claims.

13. A body panel (100) according to the preceding claim, comprising at least one wall made of plastic, a transmitting antenna (300a) connected to the electronic unit (900) via a first waveguide (700a) and configured to transmit an electromagnetic wave emitted by the electronic unit (900) in a predetermined direction, a receiving antenna (300b) connected to the electronic unit (900) via a second waveguide (700b), said receiving antenna (300b) being configured to receive the electromagnetic wave emitted by the transmitting antenna (300a) and reflected by an obstacle, and to propagate the received reflected electromagnetic wave towards the electronic unit (900), said transmitting antenna (300a) and receiving antenna (300b) being arranged behind the plastic wall.

14. Body panel (100) according to the preceding claim, in which the transmitting antenna (300a) and the receiving antenna (300b) are arranged in a uniform area of the body panel (100)

15. A body part (100) according to one of claims 12 to 14, wherein the body part (100) is a front bumper of a motor vehicle, in particular a land vehicle, and comprises a first receiving antenna (300b) arranged in a central region of the bumper, the central axis (D300b) of the reception cone is oriented in the direction (X) of the vehicle's forward motion, a second receiving antenna (300b') arranged in a lateral region of the bumper, the central axis (D300b') of the reception cone is oriented at an azimuthal angle greater than 30° relative to the direction (X) of the vehicle's forward motion; and a transmitting antenna (300a) is situated in an intermediate region between the central region and the lateral region, the central axis (D300a) of the transmission cone forming an azimuthal angle of between 0 and 30° relative to the direction (X) of the vehicle's forward motion.

16. A body panel (100) according to one of claims 12 to 15, in which the antennas (300a, 300b, 300b') are elongated in shape and in which the length of the various antennas (300a, 300b, 300b') may differ from one antenna to another.

17. A motorized land vehicle (1) comprising a body panel (100) according to one of the preceding claims.
